Europäisches Patentamt

European Patent Office

Office européen des brevets

(19)

(11) **EP 0 743 802 A2**

(12) **EUROPÄISCHE PATENTANMELDUNG**

(43) Veröffentlichungstag:
20.11.1996 Patentblatt 1996/47

(51) Int. Cl.⁶: **H04Q 7/38**, H04Q 7/30,
H04B 7/26

(21) Anmeldenummer: 96107226.1

(22) Anmeldetag: 08.05.1996

(84) Benannte Vertragsstaaten:
**DE ES FI FR GB IT SE**

(30) Priorität: **19.05.1995 DE 19518399**

(71) Anmelder:
• **Alcatel SEL Aktiengesellschaft**
**D-70435 Stuttgart (DE)**
Benannte Vertragsstaaten:
**DE ES FR GB IT SE**
• **ALCATEL N.V.**
**NL-2288 BH  Rijswijk (NL)**
Benannte Vertragsstaaten:
**FI**

(72) Erfinder:
• **Tangemann, Michael, Dr.**
**71229 Leonberg (DE)**
• **Turban, Karl-Albert**
**71229 Leonberg (DE)**

(74) Vertreter: **Knecht, Ulrich Karl, Dipl.-Ing. et al**
**Alcatel Alsthom**
**Intellectual Property Department,**
**Postfach 30 09 29**
**70449 Stuttgart (DE)**

(54) **Prozessorgesteuerte Vorrichtung zur Verfolgung einer Mobilstation in einem SDMA-Mobilfunksystem**

(57)    Zur Verfolgung der Mobilstationen in einem SDMA-Mobilfunksystem sind prozessorgesteuerte Vorrichtungen bekannt, die fortlaufend ein von einer Funkfeststation empfangenes Funksignal überwachen und die die Empfangsrichtung ($\alpha$) und den Abstand (r) zwischen der Funkfeststation (BTS) und einer das Funksignal aussendenden Mobilstation (MS) ermitteln. Die Überwachung des Funksignals dient auch zur Unterstützung eines Weiterreichens der Mobilstation (MS) von einer Funkzelle (C) zur nächsten (C').

Die Erfindung schlägt vor eine solche prozessorgesteuerte Vorrichtung (CTR) dadurch zu verbessern, daß sie mittels der Funksignalüberwachung feststellt, ob die Mobilstation (MS) sich im wesentlichen entlang des Randes der Funkzelle (C) bewegt, und daß die Vorrichtung in einem solchen Fall ein Blockierungssignal (NOHO) an eine Einrichtung (BSC) sendet, die das Weiterreichen steuert und aufgrund des Blockierungssignals blockiert. Dadurch wird ein nutzloses Hin- und Herreichen der Mobilstation unterbunden.

Fig.1

EP 0 743 802 A2

## Beschreibung

Die Erfindung betrifft eine prozessorgesteuerte Vorrichtung gemäß dem Oberbegriff des Anspruchs 1 sowie eine damit ausgestattete Funkfeststation und Funkfeststationssteuerung für ein SDMA - Mobilfunksystem (SDMA: Space Division Multiple Access).

Eine solche Vorrichtung ist aus WO 93/12590 bekannt. Dort wird eine als SDMA-Controller bezeichnete Vorrichtung beschrieben, die ein von einer Funkfeststation empfangenes Funksignal überwacht, um eine Mobilstation zu verfolgen, die sich in einer von der Funkfeststation versorgten Funkzelle befindet und dieses Funksignal aussendet. Wie in Wo 93/12590 auf Seiten 22 bis 24 beschrieben werden zur Bestimmung des aktuellen Aufenthaltsortes der Mobilstation, die Raumrichtung DOA (Direction of Arnival), aus der das Funksignal empfangen wird, und die Ankunftszeit TOA (Time of Arrival) des Funksignals erfaßt. Der SDMA Controller erfaßt fortlaufend diese Funksignalparameter, um Probleme beim Weiterreichen der Mobilstation von einer Funkzelle zur nächsten zu mildern (s. dort S. 24, 1 Abs.). Welche Probleme wie gemildert werden wird in Wo 93/12590 nicht näher beschrieben. Auch eine Lösung des bei zellularen Funksystemen allgemein bekannten Problems, daß eine Steuerung des Weiterreichens einen instabilen Zustand einnehmen kann, sodaß die Mobilstation mehrmals zwischen zwei Funkzellen hin - und hergereicht wird, ist dort nicht beschrieben.

Aufgabe der Erfindung ist es, die eingangs genannte Vorrichtung so zu verbessern, daß diese die Steuerung des Weiterreichens zur Vermeidung dieses Problems unterstützt. Gelöst wird die Aufgabe durch eine prozessorgesteuerte Vorrichtung mit den Merkmalen nach Anspruch 1.

Demnach stellt die erfindungsgemäße Vorrichtung fest, ob die Mobilstation sich im wesentlichen entlang des Randes der Funkzelle bewegt, und blockiert in einem solchen Fall das Weiterreichen der Mobilstation, indem die Vorrichtung ein Blockierungssignal an eine Einrichtung des SDMA- Mobilfunksystem signalisiert, die das Weiterreichen steuert. Dadurch wird verhindert, daß die Steuerung des Weiterreichens einen instabilen Zustand einnimmt, der zu einer erhöhten Signalisierung und damit zu einer Belastung der steuernden Einrichtung, wie etwa der Funkvermittlungsstelle, führt. Die erfindungsgemäße Vorrichtung kann durch eine einfache Erweiterung der ohnehin erforderlichen Funksignalüberwachung realisiert werden. Die Vorrichtung ist in eine Funkfeststation gemäß Anspruch 6 oder in eine Funkfeststationssteuerung gemäß Anspruch 7 integrierbar. Vorteilhafte Ausgestaltungen der Erfindung sind den Unteransprüchen zu entnehmen.

Im weiteren folgt die Beschreibung eines ersten und eines zweiten Ausführungsbeispiels der Erfindung anhand der Zeichnungen, die schematisch den Aufbau eines SDMA-Mobilfunksystems darstellen, wobei

Fig. 1 zeigt, wie die erfindungsgemäße Vorrichtung in eine Funkfeststation integriert ist, und

Fig. 2 zeigt, wie die erfindungsgemäße Vorrichtung in eine Funkfeststationssteuerung integriert ist.

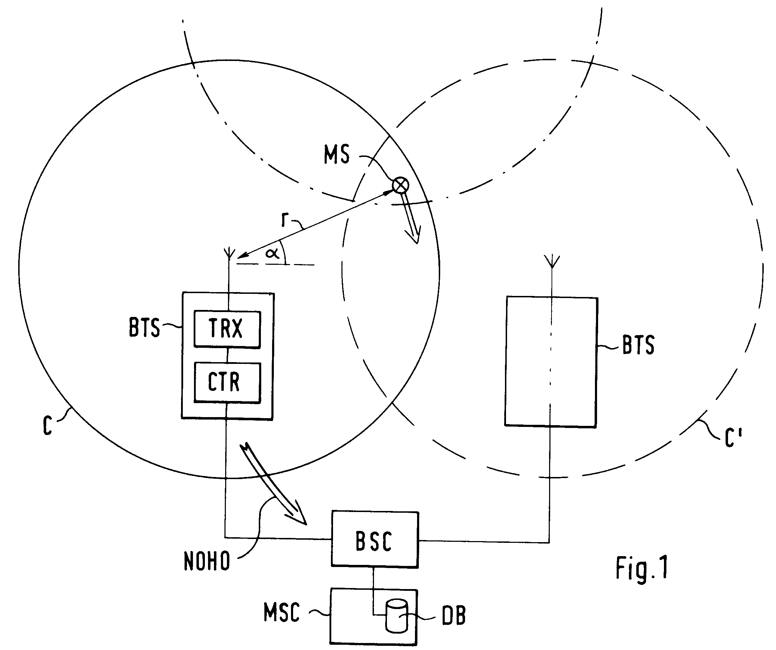

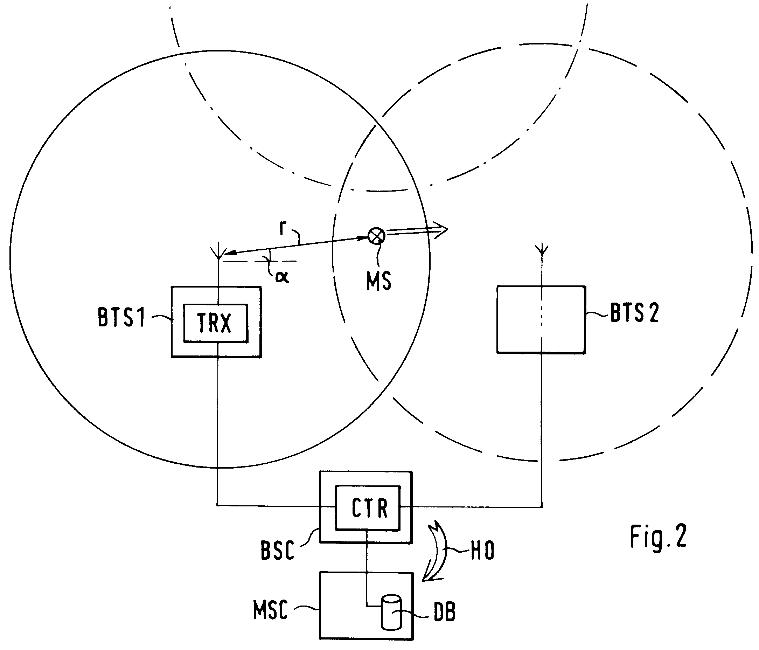

Zudem ist in Fig. 1 eine Situation dargestellt, bei der die Vorrichtung ein Weiterreichen blockiert. In Fig. 2 hingegen ist eine Situation dargestellt, bei der die Vorrichtung ein Weiterreichen frühzeitig aus löst.

Das in Fig. 1 schematisch dargestellte SDMA-Mobilfunksystem enthält Funkfeststationen BTS und BTS', die jeweils eine Funkzelle C bzw. C' versorgen. Die Funkfeststationen sind mit einer Funkfeststationssteuerung BSC verbunden, die wiederum mit einer Mobilfunkvermittlungsstelle MSC verbunden ist. Die Mobilfunkvermittlungsstelle MSC, die eine Datenbank DB enthält, als auch die Funkfeststationssteuerung BSC steuern ein Weiterreichen einer Mobilstation MS von einer Funkstelle zur nächsten. In diesem Beispiel ist die Mobilstation MS in Funkverbindung mit der Funkfeststation BTS, die die Funkzelle C versorgt. Die Funkfeststation BTS ist zur Durchführung einer SDMA - Funkübertragung mit einer phasengesteuerten Gruppenantenne und mit einem Funksendeempfänger TRX ausgestattet, wie er etwa aus WO 93/12590 bekannt ist. Darüberhinaus enthält die Funkfeststation BTS eine prozessorgesteuerte Vorrichtung CTR, die mit dem Funksendeempfänger TRX verbunden ist und die erfindungsgemäß ein von diesem empfangenes Funksignal überwacht, um festzustellen, ob die das Funksignal aussendende Mobilstation MS sich entlang des Randes der Funkzelle C bewegt. In einem solchen Fall sendet die Vorrichtung CTR ein Blockierungssignal NOHO an die Funkfeststationssteuerung BSC, um ein Weiterreichen der Mobilstation MS an eine der benachbarten Funkzellen, wie etwa an die Funkzelle C', zu verhindern.

Die Vorrichtung erfaßt während der Funkübertragung zwischen der Mobilstation MS und der Funkfeststation BTS fortlaufend in vorgegebenen Zeitabständen von etwa 30 sek. die Signallaufzeit des Funksignals auf dem Aufwärtskanal. Dazu sendet die Funkfeststation BTS einen ersten Funkimpuls an die Mobilstation MS. Diese wartet nach Empfang des Funkimpulses eine vorgegebene Zeitspanne dT, die etwa 1,7 ms beträgt, und sendet dann als Antwort einen zweiten Funkimpuls an die Funkfeststation BTS. In der Vorrichtung CTR wird nun die Signallaufzeit Tp nach folgender Gleichung ermittelt: $Tp = 0.5 \times (Tsum - dT)$ , wobei Tsum die von der Vorrichtung CTR gemessene Zeitspanne zwischen dem Senden des ersten Funkimpulses und dem Empfang des zweiten Funkimpulses ist. Die fortlaufend ermittelten Werte der Signallaufzeit werden in die Datenbank DB eingetragen. Durch Vergleich des zuletzt ermittelten Wertes mit den zuvor ermittelten Werten errechnet die Vorrichtung Änderungen der Signallaufzeit. Liegen die Änderungen innerhalb eines Toleranzbereiches von etwa 1 μs, so wird davon ausgegangen, daß sich der Abstand r zwischen der Mobilstation MS und der Basisstation BTS nicht wesentlich geändert hat (1 $\mu$s entspricht etwa 300 m). Mittels Überwachung der Empfangsrichtung $\alpha$, aus der das Funksignal von der Funkfeststation BTS empfangen wird, stellt die Vorrichtung CTR dann fest, daß die Mobilstation MS sich senkrecht zum Radius der Funkzelle C bewegt. Um festzustellen, ob sich die Mobilstation entlang des Randes der Funkzelle C bewegt, wertet die Vorrichtung CTR den zuletzt ermittelten Betrag der Signallaufzeit des Funksignals aus. Beträgt die ermittelte Signallaufzeit etwa 50 $\mu$s, so befindet sich die Mobilstation MS am Rand der Funkzelle C, die hier einen Durchmesser von ca. 30 km hat

Die Vorrichtung signalisiert dann das Blockierungssignal NOHO an die Einrichtung, die das Weiterreichen der Mobilstation MS steuert, d. h. in diesem Beispiel an die Funkfeststationssteuerung BSC. Somit wird solange ein Weiterreichen der Mobilstation MS unterbrochen, wie diese sich noch im Randbereich der Funkzelle C aufhält. Dadurch wird ein mehrmaliges Weiterreichen vermieden, bei dem die Funkverbindung innerhalb kurzer Zeit hin - und hergeschaltet wird. Eine Belastung der Signalisierungswege im Mobilfunksystem wird ebenfalls dadurch vermieden. Die erfindungsgemäße Vorrichtung wertet somit die Funksignalparameter r und $\alpha$ aus, die ohnehin zur Durchführung der SDMA - Funkübertragung benötigt werden. Dadurch ist die Erfindung sehr einfach zu realisieren. Alternativ zu der oben beschriebenen Ermittelung der Signallaufzeit kann auch eine fortlaufende Überwachung des Empfangspegels durchgeführt werden, um Änderungen des Abstandes r festzustellen. Weiterhin ist es auch denkbar die Signallaufzeit und den Empfangspegel gleichfalls zu erfassen, um eine zuverlässige Überwachung des Abstandes zu erreichen.

Das oben beschriebene Verfahren zur Verfolgung der einen Mobilstation MS ist für jede Mobilstation, die sich innerhalb des SDMA-Mobilfunksystem bewegt durchführbar. Dabei ist es vorteilhaft die erfaßten Funksignalparametern, wie Empfangsrichtung, Empfangspegel oder Signallaufzeit, mit Zeitangaben zu verknüpfen die den Zeitpunkt der Erfassung angeben. Alle Daten werden in der Datenbank DB abgelegt und bilden die Datensätze für eine Datei, auf die bei einer Funkresourcenplanung oder - umverteilung zugegriffen werden kann. Aus diesen Datensätzen können Bewegungsprofile abgeleitet werden, die angeben zu welchen Zeiten (Wochentagen, Uhrzeiten) die Teilnehmerdichte im Funknetz wie verteilt ist. Zur besseren Nutzung der Funkresourcen reicht es aus, eine solche statistische Datenerfassung separat und unabhängig von der vorgeschlagenen Funksignalüberwachung und Blockierung des Weiterreichens durchzuführen

Ein zweites Ausführungsbeispiel wird nun anhand der Fig. 2 beschrieben, die schematisch ein SDMA-Mobilfunksystem zeigt, das sich von dem SDMA-Mobilfunksystem lediglich wie folgt unterscheidet:

Die prozessorgesteuerte Vorrichtung CTR ist in diesem zweiten Beispiel in die Funkfeststationssteuerung BSC und nicht in die Funkfeststationen BTS1 und BTS2 integriert. Dadurch erfolgt die Überwachung der empfangenen Funksignale, d.h. die Überwachung der Aufwärtsfunkkanäle, an einer zentralen Stelle in dem Mobilfunksystem. Diese zentrale Stelle ist in diesem Beispiel die Funkfeststationssteuerung BSC, die die Funkkanalzuweisung sowie das Weiterreichen in dem ihr zugeordneten Gebiet, der sogenannte BSC-area, steuert. Damit wird in der BSC die ohnehin notwendige herkömmliche Funksignalüberwachung erfindungsgemäß verbessert, um ein überflüssiges Weiterreichen zu verhindern.

Die hier in Fig. 2 schematisch dargestellte Situation zeigt eine sich bewegende Mobilstation MS, die die Funkzelle C1 in Richtung der benachbarten Funkzelle C2 verläßt. Durch die erfindungsgemäße Überwachung des von der Funkfeststation BTS1 empfangenen Funksignales, stellt die prozessorgesteuerte Vorrichtung CTR fest, daß sich die Mobilstation MS zum Rand der Funkzelle C1 hinbewegt. Die Vorrichtung CTR ermittelt durch Auswertung der in der Datenbank abgelegten Bewegungsprofil-Daten r (t) und $\alpha$ (t) die aktuelle Position, die Hauptbewegungsrichtung und die mittlere Geschwindigkeit der Mobilstation MS. Danach errechnet die Vorrichtung CTR einen Zeitpunkt, an dem die Mobilstation MS voraussichtlich den Rand der Funkzelle erreicht. Zu diesem Zeitpunkt, der auch durch einen Empfangspegelschwellwert definiert sein kann, wird herkömmlicherweise das Weiterreichen der Mobilstation MS ausgelöst.

Die erfindungsgemäße Vorrichtung CTR signalisiert jedoch vor Erreichen dieses Zeitpunktes ein Auslösesignal HO an die das Weiterreichen steuernde Einrichtung. In dem Beispiel nach Fig. 2 sendet die Vorrichtung CTR als Auslösesignal HO die ermittelte Bewegungsrichtung $\alpha$ an die Mobilfunkvermittlungsstelle MSC, die hier das Weiterreichen steuert. In diesem Beispiel entfällt eine Berechnung der tatsächlichen Bewegungsrichtung der Mobilstation MS, d.h. eine Berechnung aufgrund der ermittelten Signallaufzeiten und/oder der Empfangspegel, indem die Bewegungsrichtung gleich der Empfangsrichtung $\alpha$ des Funksignals gesetzt wird. Diese Vereinfachung ist dann zulässig, wenn der Funkzellenradius (hier z.B. 15 km) groß ist gegen den zuletzt ermittelten Abstand der Mobilstation MS zum Funkzellenrand (hier z.b. 1 km). Somit wertet die in Fig. 2 dargestellte Vorrichtung CTR fortlaufend die Signallaufzeit und die komplexen Wichtungsfaktoren des von der Funkfeststation BTS1 empfangenen Funksignals aus, um zwei Zeitfunktionen zu erhalten, die Änderungen des Abstands r (t) und Änderungen der Empfangsrichtung $\alpha$ (t) angeben. Diese beiden Zeitfunktionen kennzeichnen das Bewegungsprofil der Mobilstation MS und reichen aus, um festzustellen, in welcher Richtung die Mobilstation MS die Funkzelle C1 verläßt und um frühzeitig das Weiterreichen zu der in der Richtung nächstliegenden Funkzelle C2 auszulösen. Die fortlaufende Auswertung der Signallaufzeit und die der Wichtungsfaktoren erfolgt in vorgebbaren Zeitabständen, die mit einer Zunahme der erfaßten Signallaufzeit abnehmen. Hier werden bei einer Signallaufzeit von etwa 10 µs, 20 µs oder 50 µs Zeitabstände von etwa 2 Min., 1 Min. bzw. 30 sec. festgelegt. Durch diese Maßnahme führt die Vorrichtung CTR die erfindungsgemäße Auswertung nur dann in kurzen Zeitabständen aus, falls die Mobilstation MS sich im Randbereich der Funkzelle aufhält. Befindet sich die Mobilstation MS im Kernbereich der Funkzelle (kleine Signallaufzeit) ist eine langsame Überwachung (große Zeitabstände) ausreichend. Somit kann der Rechenaufwand für die prozessorgesteuerte Vorrichtung CTR reduziert werden. Die prozessorgesteuerte Vorrichtung CTR ist in diesem Beispiel auf der Grundlage der ohnehin benötigten Steuerelektronik in der Funkfeststationssteuerung BSC aufgebaut. Es ist auch denkbar die Vorrichtung mittels Personal-Computers zu realisieren, der mit der Datenbank verbunden ist.

Die anhand der beiden Ausführungsbeispiele beschriebene Erfindung ist auch in anderen denkbaren Varianten realisierbar. So kann die prozessorgesteuerte Vorrichtung etwa auch in eine Funkvermittlungsstelle integriert werden, insbesondere zusammen mit der Datenbank.

**Patentansprüche**

1. Prozessorgesteuerte Vorrichtung (CTR), die in einem SDMA - Mobilfunksystem für mindestens eine Funkfeststation (BTS) ein von dieser empfangenes Funksignal überwacht zur Verfolgung einer Mobilstation (MS), die innerhalb einer von der Funkfeststation (BTS) versorgten Funkzelle (C) dieses Funksignal aussendet,
   **dadurch gekennzeichnet**, daß
   die prozessorgesteuerte Vorrichtung (CTR) mittels der Überwachung des Funksignals feststellt, ob die Mobilstation (MS) sich im wesentlichen entlang des Randes der Funkzelle (C) bewegt, und die in einem solchen Fall ein Weiterreichen der Mobilstation (MS) blockiert mittels Signalisierung eines Blockierungsignals (NOHO) an eine das Welterreichen steuernde Einrichtung (MSC) des SDMA - Mobilfunksystems.

2. Prozessorgesteuerte Vorrichtung (CTR) nach Anspruch 1,
   dadurch gekennzeichnet, daß die Vorrichtung (CTR) das Funksignal mittels einer fort laufenden Erfassung dessen Empfangspegels und/oder dessen Signallaufzeit überwacht.

3. Prozessorgesteuerte Vorrichtung (CTR) nach Anspruch 2
   dadurch gekennzeichnet, daß die Vorrichtung (CTR) mit einer Datenbank (DB) verbindbar ist, in der sie den erfaßten Empfangspegel und/oder die Signallaufzeit zusammen mit einer Zeitangabe ablegt, die die aktuelle Uhrzeit enthält.

4. Prozessorgesteuerte Vorrichtung (CTR) nach Anspruch 1,
   dadurch gekennzeichnet, daß die Vorrichtung (CTR) mittels der Überwachung des Funksignals feststellt, ob die Mobilstation (MS) sich im wesentlichen zum Rand der Funkzelle (C) hinbewegt, und die in einem solchen Fall die Bewegungsrichtung (α) feststellt und diese an die das Weiterreichen steuernde Einrichtung (MSC) signalisiert, um das Weiterreichen der Mobilstation (MS) zu der in Bewegungsrichtung nächstliegenden Funkzelle auzulösen.

5. Prozessorgesteuerte Vorrichtung (CTR) nach Anspruch 2,
   dadurch gekennzeichnet, daß die Vorrichtung (CTR) die Signallaufzeit des Funksignals in vorgebbaren Zeitabständen erfaßt und die Zeitabstände verkleinert, falls die Signallaufzeit zunimmt.

6. Funkfeststation (BTS) für ein SDMA-Mobilfunksystem mit einer prozessorgesteuerten Vorrichtung (CTR), die ein von der Funkfeststation (BTS) empfangenes Funksignal überwacht zur Verfolgung einer Mobilstation (MS), die innerhalb einer von der Funkfeststation (BTS) versorgten Funkzelle (C) dieses Funksignal aussendet,
   **dadurch gekennzeichnet**, daß
   die prozessorgesteuerte Vorrichtung (CTR) mittels der Überwachung des Funkksignals feststellt, ob die Mobilstation (MS) sich im wesentlichen entlang des Randes der Funkzelle (C) bewegt, und die in einem solchen Fall ein Weiterreichen der Mobilstation (MS) an eine benachbarte Funkzelle blockiert mittels Signalisierung eines Blockierungssignals (NOHO) an eine das Weiterreichen steuernde Einrichtung (MSC) des SDMA-Mobilfunksystems.

7. Funkfeststationssteuerung (BSC) für mindestens zwei Funkfeststationen (BTS1, BTS2) innerhalb eines SDMA - Mobilfunksystems mit einer prozessorgesteuerten Vorrichtung (CTR), die für jede dieser Funkfeststationen (BTS1) ein von dieser empfangenes Funksignal überwacht zur Verfolgung einer Mobilstation (MS), die innerhalb einer von der Funkfeststation (BTS1) versorgten Funkzelle (C1) dieses Funksignal aussendet,
   **dadurch gekennzeichnet**, daß
   die prozessorgesteuerte Vorrichtung (CTR) mittels der Überwachung des Funksignals feststellt, ob die Mobilstation (MS) sich im wesentlichen entlang des Randes der Funkzelle (C1) bewegt, und die in einem solchen Fall ein von der Funkfeststationssteuerung (BSC) gesteuertes Weiterreichen der Mobilstation (MS) an eine benachbarte Funkzelle (C2) blockiert oder ein Blockierungssignal an eine andere das Weiterreichen steuernde Einrichtung (MSC) des SMDA - Mobilfunksystems signalisiert.

Fig.1

Fig.2